# EUROPÄISCHE PATENTSCHRIFT

(11) **EP 0 494 727 B1**
(45) Veröffentlichungstag und Bekanntmachung des Hinweises auf die Patenterteilung: **01.03.1995**
(21) Anmeldenummer: 92250007.9
(22) Anmeldetag: 08.01.1992
(51) Int. Cl.: B60R 17/02, F16N 7/38, F16N 21/00

(54) **Zentralschmieraggregat**
Central lubricating unit
Unité centralisée de lubrification

(30) Priorität: 10.01.1991 DE 4100725
(43) Veröffentlichungstag der Anmeldung: 15.07.1992
(73) Patentinhaber: Willy Vogel AG, D-12277 Berlin (DE)
(72) Erfinder: Meuer, Johannes, Dipl.-Ing., W-1000 Berlin 22 (DE); Todtenhaupt, Dieter, Ing. (grad.), W-1000 Berlin 31 (DE); Schönherr, Dieter, Ing. (grad.), W-1000 Berlin 65 (DE)
(74) Vertreter: Böning, Manfred, Dr.-Ing.

(56) Entgegenhaltungen:
- FR-A- 384 563
- FR-A- 1 373 456
- GB-A- 1 561 781
- US-A- 2 203 710
- US-A- 4 143 995

## Beschreibung

Die Erfindung betrifft ein Zentralschmieraggregat für Fahrzeuge mit einer Schmierstoffpumpe, einem Schmierstoffbehälter und einem die Schmierstoffpumpe mit einer Zuleitung zu mehreren Schmierstoffverteilern verbindenden, mehrere Schmierstoffkanäle und mindestens ein Druckentlastungsventil aufweisenden Verbindungsstück, wobei die Schmierstoffpumpe unterhalb eines Trägers angeordnet ist, der eine Halterung für den Schmierstoffbehälter aufweist.

Aus der gattungsbildenden DE-AS 1 184 659 ist ein Zentralschmieraggregat der vorstehenden Art bekannt, bei dem der Schmierstoffbehälter in mehr oder weniger regelmäßigen Abständen nachgefüllt und darüber hinaus gelegentlich gereinigt werden muß. Das Nachfüllen ist nicht nur umständlich, sondern beim Nachfüllen ist auch sorgfältig darauf zu achten, daß keine Schmutzpartikel in den Schmierstoffbehälter gelangen, da sie zu Störungen in den Schmierstoffverteilern führen können. Bei großen von Berufskraftfahrern betreuten Fahrzeugen und in Fällen von Fuhrparks bereitet es keine Schwierigkeiten, den geschilderten Umständen Rechnung zu tragen. Entsprechendes gilt jedoch nicht oder zumindest nicht in gleichem Maße für den Bereich zentralgeschmierter Kleinlaster, die überwiegend von technisch ungeschultem Personal gefahren werden. Der Erfindung liegt die Aufgabe zugrunde, ein Zentralschmieraggregat der in Betracht gezogenen Art zu schaffen, bei dem die Probleme, die beim Nachfüllen eines Schmierstoffbehälters auftreten können, eliminiert sind. Diese Aufgabe wird erfindungsgemäß dadurch gelöst, daß der Träger mit Halterungen für zwei Schmierstoffkartuschen versehen ist, von denen die eine über einen Durchlaß im Träger mit der Schmierstoffpumpe in Verbindung steht, während der andere eine Reservekartusche bildet.

Das erfindungsgemäße Zentralschmieraggregat bietet den Vorteil, daß bei ihm die Notwendigkeit zum Nachfüllen und Reinigen eines Schmierstoffbehälters entfällt und statt dessen lediglich jeweils ein Austausch von Schmierstoffkartuschen erforderlich ist, der auch Laien nicht die geringsten Schwierigkeiten bereitet.

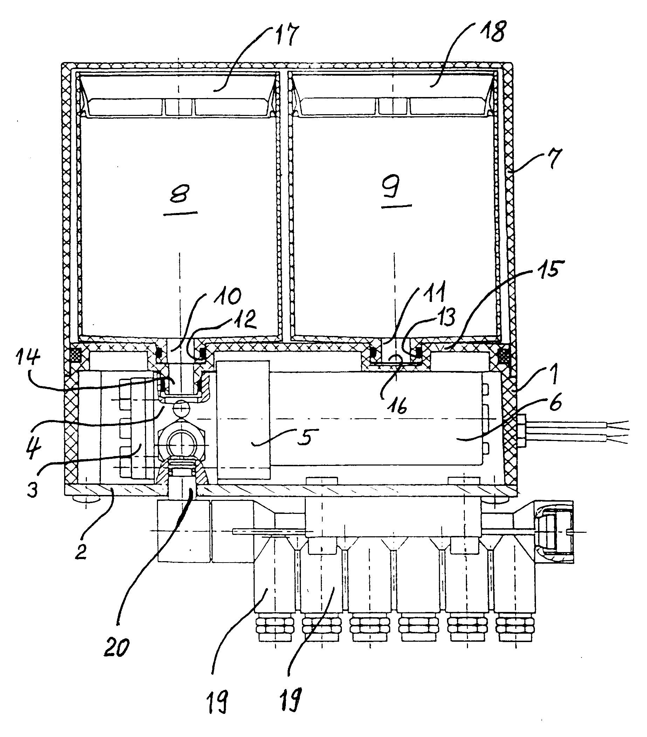

Weitere Einzelheiten und Merkmale der Erfindung ergeben sich aus der nachstehenden Beschreibung eines in der beigefügten Zeichnung dargestellten Ausführungsbeispiels.

In der einzigen Figur ist 1 ein durch einen Deckel 2 verschlossenes Gehäuse, in dem eine Zahnradpumpe 3 und der über ein Verbindungsstück 4 und ein Zwischenstück 5 mit dieser verbundene Antriebsmotor 6 eines Zentralschmieraggregates angeordnet sind. Oberhalb des Gehäuses 1 sind unter einer Haube 7 aus durchsichtigem Material zwei mit Fließfett gefüllte Schmierstoffkartuschen 8 und 9 untergebracht. Beide Schmierstoffkartuschen 8 und 9 weisen Mundstücke 10 bzw. 11 auf, welche in Ausnehmungen 12 bzw. 13 gesteckt sind, die Halterungen für die Schmierstoffkartuschen bilden. Während die Schmierstoffkartusche 8 offen ist und über einen Durchlaß 14 in einem von der oberen Wand des Gehäuses 1 gebildeten Träger 15 mit dem Verbindungsstück 4 in Verbindung steht, ist die Kartusche 9 verschlossen, wobei der Verschluß von einer ihr Mundstück 11 abdeckenden Folie 16 gebildet wird.

Jede der beiden mit Fließfett gefüllten Kartuschen 8 und 9 ist mit einem Folgekolben 17 bzw. 18 ausgestattet, der beim Absaugen des Fließfettes aus der jeweils angeschlossenen Kartusche eine Trichterbildung im Schmierstoffbehälter verhindert.

Infolge der durchsichtigen Ausbildung der Haube 7 läßt sich anhand der Lage des Folgekolbens 17 problemlos erkennen, wann der Schmierstoffbehälter 8 leer ist. In diesem Falle braucht der Benutzer ihn lediglich gegen den Schmierstoffbehälter 9 auszutauschen und bei der nächsten Gelegenheit einen neuen Reserve-Schmierstoffbehälter an die Stelle des letzteren zu stecken.

Mit 19 sind mehrere Schmiermittelverteiler bezeichnet, die über eine Zuleitung 20 mit dem mehrere Schmierstoffkanäle aufweisenden Zwischenstück 4 verbunden sind.

## Patentansprüche

1. Zentralschmieraggregat für Fahrzeuge mit einer Schmierstoffpumpe (3), einem Schmierstoffbehälter (8) und einem die Schmierstoffpumpe (3) mit einer Zuleitung (20) zu mehreren Schmierstoffverteilern (19) verbindenden, mehrere Schmierstoffkanäle und mindestens ein Druckentlastungsventil aufweisenden Verbindungsstück (4), wobei die Schmierstoffpumpe (3) unterhalb eines Trägers (15) angeordnet ist, der eine Halterung für den Schmierstoffbehälter (8) aufweist, dadurch **gekennzeichnet**, daß der Träger (15) mit Halterungen (12,13) für zwei Schmierstoffkartuschen (8,9) als Schmierstoffbehälter versehen ist, von denen die eine (8) über einen Durchlaß (14) im Träger (15) mit der Schmierstoffpumpe (3) in Verbindung steht, während die andere (9) eine Reservekartusche bildet.

2. Zentralschmieraggregat nach Anspruch 1, dadurch gekennzeichnet, daß der Träger (15) von der Decke eines Gehäuses (1) gebildet wird, in dem die Schmierstoffpumpe (3) und das Verbindungsstück (4) untergebracht sind.

3. Zentralschmieraggregat nach Anspruch 1 oder 2, dadurch gekennzeichnet, daß die Schmierstoffkartuschen (8,9) unter einer Haube (7) aus durchsichtigem Material angeordnet sind.

4. Zentralschmieraggregat nach einem der Ansprüche 1 bis 3, dadurch gekennzeichnet, daß die Schmierstoffkartuschen (8,9) mit Folgekolben (17,18) versehen sind.

5. Zentralschmieraggregat nach einem der Ansprüche 1 bis, 4, dadurch gekennzeichnet, daß die Schmierstoffpumpe (3) als Zahnradpumpe ausgebildet ist.

## Claims

1. A centralized lubrication system for vehicles, with a lubricant pump (3), a lubricant reservoir (8) and a connection piece (4) connecting the lubricant pump (3) via a feed line (20) to a plurality of lubricant distributors (19) and provided with a plurality of lubricant channels and at least one pressure relief valve, wherein the lubricant pump (3) is arranged beneath a support (15) which is provided with a holder for the lubricant reservoir (8), characterised in that the support (15) is provided with holders (12, 13) for two lubricant cartridges (8, 9) as a lubricant reservoir, one of which (8) is connected via a passage (14) in the support (15) to the lubricant pump (3), with the other (9) forming a reserve cartridge.

2. A centralized lubrication system according to claim 1, characterised in that the support (15) is formed by the cover of a housing (1) in which the lubricant pump (3) and the connecting piece (4) are accommodated.

3. A centralized lubrication system according to claim 1 or claim 2, characterised in that the lubricant cartridges (8, 9) are arranged beneath a hood (7) of transparent material.

4. A centralized lubrication system according to any one of claims 1 to 3, characterised in that the lubricant cartridges (8, 9) are provided with sequential pistons (17, 18).

5. A centralized lubrication system according to any one of claims 1 to 4, characterised in that the lubricant pump (3) is in the form of a gear pump.

## Revendications

1. Unité centralisée de lubrification pour véhicules automobiles comportant une pompe à lubrifiant (3), un réservoir à lubrifiant (8) et un raccord (4) raccordant la pompe à lubrifiant (3) à une conduite d'alimentation (20) menant à plusieurs distributeurs de lubrifiant (19) et présentant plusieurs canaux à lubrifiant et au moins une soupape de détente, la pompe à lubrifiant (3) étant agencée en dessous d'un support (15) qui présente une fixation pour un réservoir de lubrifiant (8), caractérisée en ce que le support (15) est équipé de fixations (12, 13) pour deux cartouches de lubrifiant (8, 9) formant des réservoirs de lubrifiant, dont l'une (8) est en communication avec la pompe à lubrifiant (3) via un passage (14) du support (15), tandis que l'autre (9) forme une cartouche de réserve.

2. Unité centralisée de lubrification selon la revendication 1, caractérisée en ce que le support (15) est formé par le couvercle d'un boîtier (1), dans lequel la pompe à lubrifiant (3) et le raccord (4) sont logés.

3. Unité centralisée de lubrification selon la revendication 1 ou 2, caractérisée en ce que les cartouches de lubrifiant (8,9) sont agencées sous un capot (7) constitué d'une matière transparente.

4. Unité centralisée de lubrification selon l'une quelconque des revendications 1 à 3, caractérisée en ce que les cartouches de lubrifiant (8, 9) sont équipées de pistons suiveurs (17, 18).

5. Unité centralisée de lubrification selon l'une quelconque des revendications 1 à 4, caractérisée en ce que la pompe à lubrifiant (3) se présente sous la forme d'une pompe à engrenages.
